# EUROPEAN PATENT APPLICATION

(11) **EP 4 653 397 A1**
(43) Date of publication of application: **26.11.2025**
(21) Application number: 24924255.3
(22) Date of filing: 20.12.2024
(51) Int. Cl.: C02F 1/469, C02F 1/44, B01D 61/44, B01D 61/52, B01D 61/36, C02F 101/10

(54) **WASTEWATER TREATMENT SYSTEM**

(30) Priority: 05.09.2024 KR 20240120836
(71) Applicant: Terracle Co., Ltd., Busan 48059 (KR)
(72) Inventor: LEE, Seong Eon, Incheon 22640 (KR); KIM, Do Wan, Incheon 22640 (KR)
(74) Representative: Isarpatent
(86) International application number: PCT/KR2024/020792
(87) International publication number: WO 2025/216391

(57) **Abstract**

A wastewater treatment system according to an exemplary embodiment of the present disclosure is a wastewater treatment system which treats wastewater including a sodium sulfate solution, including an electrodialysis device which separates the sodium sulfate solution of the wastewater into a first solution including sulfate ions, a second solution including sodium ions, and a circulated wastewater from which sodium sulfate is removed, a first membrane distillation device which extracts a purified water from the first solution to concentrate the first solution, and a second membrane distillation device which extracts a purified water from the second solution to concentrate the second solution.

According to the exemplary embodiment of the present disclosure, the wastewater treatment system selectively separates a salt compound and other harmful ions in a wastewater using an electrodialysis device to effectively separate a high concentration ion solution. By doing this, the reuse of the material after wastewater treatment is maximized and the environmental harmfulness of the salt compound is significantly reduced.

## Description

### [TECHNICAL FIELD]

The present disclosure relates to a wastewater treatment system, and more particularly, to a closed-circulating wastewater treatment system using a continuous electrodialysis and membrane distillation device.

### [BACKGROUND ART]

In accordance with the development of modern industry, the treatment and reuse of wastewater generated from various processes are emerging as important issues in terms of environmental protection and resource conservation. Specifically, industrial wastewater contains various harmful components, such as salt compounds, heavy metals, and organic pollutants, so that a technology to effectively remove and recycle them is essential. Existing wastewater treatment technologies mainly use physical, chemical and biological methods, which are often accompanied by high costs, energy consumption, and complex treatment processes. Specifically, wastewater including a high concentration of salt compound is not completely removed by the existing treatment technologies and residual material after treatment may have harmful effects on the environment.

The electrodialysis (ED) is a technology of separating ions with a force of electric field using an ion exchange membrane and is mainly used to desalinate salt water or remove specific ions. This technology has the advantages of relatively low energy consumption and high selectivity. However, the electrodialysis alone has limitations in removing non-volatile organic materials or fine particles in the wastewater and an additional process is required to treat the high concentration of salt compounds.

The membrane distillation (MD) is a technology which concentrates and separates steamed materials by causing the steamed materials to pass through the hydrophobic membrane. The membrane distillation operates even at a low operation temperature and is utilized in various application fields, such as seawater desalination or concentration of high concentration solution. This technology has advantages of low energy consumption and less fouling occurrence, as compared with a heat source based process of the related art. However, the membrane distillation process has disadvantages in that the efficiency is degraded when the new renewable energy or waste heat is used as a heat source and the processing efficiency fluctuates due to the sensitivity to the climate conditions.

Therefore, in consideration of the above-described problems, the present disclosure proposes a more economical and eco-friendly wastewater treatment and catalyst reuse method which overcomes the limitations of the existing wastewater treatment technology using a closed-circulating wastewater treatment system using a continuous electrodialysis-membrane distillation device. This system effectively treats wastewater generated in various industrial fields to increase reusability and makes a significant contribution to environmental protection and resource conservation.

### [Related Art Document]

### [Patent Document]

(Patent Document 1) Korean Registered Patent Publication No. 10-2217405

### [DISCLOSURE]

### [TECHNICAL PROBLEM]

The present disclosure is provided to solve the above-described problems, and an object of the present disclosure is to build a closed-circulating system using an electrodialysis device and a membrane distillation device to improve the treatment efficiency of the wastewater treatment system.

Further, an object of the present disclosure is to build a closed-circulating wastewater reuse and catalysis recovery system which separates, purifies, concentrates, and reuses salt compounds which are generated during a compound production process.

### [TECHNICAL SOLUTION]

A wastewater treatment system according to an exemplary embodiment of the present disclosure is a wastewater treatment system which treats wastewater including a sodium sulfate solution, including: an electrodialysis device which separates the sodium sulfate solution of the wastewater into a first solution including sulfate ions, a second solution including sodium ions, and a circulated wastewater from which sodium sulfate is removed; a first membrane distillation device which extracts a purified water from the first solution to concentrate the first solution; and a second membrane distillation device which extracts a purified water from the second solution to concentrate the second solution.

The wastewater treatment system according to an exemplary embodiment of the present disclosure includes a wastewater tank in which the wastewater is stored, and the circulated wastewater may enter the wastewater tank.

The wastewater treatment system according to an exemplary embodiment of the present disclosure may include a cooling water tank in which purified waters extracted from the first membrane distillation device and the second membrane distillation device are joined and cooled to be formed as a cooling water.

In the wastewater treatment system according to an exemplary embodiment of the present disclosure, the first membrane distillation device may include: a first membrane distillation tank; and a first hydrophobic dialysis membrane which divides the first membrane distillation tank into two spaces, a first solution concentrating space into which the first solution enters and a first cooling space into which the cooling water enters and allows a distilled water extracted from the first solution to pass therethrough in the form of water vapor, and the second membrane distillation device includes: a second membrane distillation tank; and a second hydrophobic dialysis membrane which divides the second membrane distillation tank into two spaces, a second solution concentrating space into which the second solution enters and a second cooling space into which the cooling water enters and allows a distilled water extracted from the second solution to pass therethrough in the form of water vapor.

The wastewater treatment system according to an exemplary embodiment of the present disclosure includes a first solution concentrating tank into which the first solution extracted from the first solution concentrating space enters; and a second solution concentrating tank into which the second solution extracted from the second solution concentrating space enters; and the first solution from the first solution concentrating tank enters the first solution concentrating space to be concentrated, and the second solution from the second solution concentrating tank enters the second solution concentrating space to be concentrated.

In the wastewater treatment system according to an exemplary embodiment of the present disclosure, the electrodialysis device may include: an electrodialysis tank; an anode which is formed on one side of the electrodialysis tank; a cathode which is formed on the other side of the electrodialysis tank; two bipolar membranes which are formed to be adjacent to the cathode and the anode; an anion dialysis membrane which is formed to be opposite to the bipolar membranes to be closer to the anode; a cation dialysis membrane which is formed to be opposite to the bipolar membranes to be closer to the cathode; a central space which is separated by the cation dialysis membrane and the anion dialysis membrane and allows the wastewater to enter therein; a first solution forming space which is separated by the bipolar membranes and the anion dialysis membrane and electrolyzes the sodium sulfate solution in the central space so that sulfate ions pass through the anion dialysis membrane to form a first solution; and a second solution forming space which is separated by the bipolar membranes and the cation dialysis membrane and electrolyzes the sodium sulfate solution in the central space so that sodium ions pass through the cation dialysis membrane to form a second solution.

In the wastewater treatment system according to an exemplary embodiment of the present disclosure, the cooling water may be supplied to the first solution forming space and the second solution forming space.

The wastewater treatment system according to an exemplary embodiment of the present disclosure may include a first solution joining point in which a first solution from the first solution concentrating tank and a first solution from the first solution forming space are joined; a first heater formed between the first solution joining point and the first solution concentrating space; a second solution joining point in which a second solution from the second solution concentrating tank and a second solution from the second solution forming space are joined; and a second heater formed between the second solution joining point and the second solution concentrating space.

The wastewater treatment system according to an exemplary embodiment of the present disclosure may include a first cooler which cools a cooling water entering the first cooling space; and a second cooler which cools a cooling water entering the second cooling space.

In the wastewater treatment system according to an exemplary embodiment of the present disclosure, in the first solution forming space, the first solution is formed as an acidic aqueous solution including sulfate ions and in the second solution forming space, the second solution is formed as an aqueous hydroxide solution including sodium ions.

### [ADVANTAGEOUS EFFECTS]

According to the exemplary embodiment of the present disclosure, the wastewater treatment system selectively separates a salt compound and other harmful ions in a wastewater using an electrodialysis device to effectively separate a high concentration ion solution. By doing this, the reuse of the material after wastewater treatment is maximized and the environmental harmfulness of the salt compound is significantly reduced.

Further, the membrane distillation device is used to effectively concentrate the ion solution which is separated by the electrodialysis. Specifically, the wastewater treatment system operates at a low operation temperature to minimize energy consumption and save the cost by utilizing a new renewable energy or waste heat. This contributes to increase the treatment water production efficiency in the membrane distillation process.

Further, the wastewater treatment system of the present disclosure employs a closed-circulating structure to reuse the treated water or to be utilized for various industrial purposes. This accelerates the reuse of the resource, saves the cost for wastewater treatment, and contributes to continuous environmental protection.

### [DESCRIPTION OF DRAWINGS]

FIG. 1 is a diagram of a wastewater treatment system according to an exemplary embodiment of the present disclosure.
FIG. 2 is a diagram of an electrodialysis device of a wastewater treatment system according to an exemplary embodiment of the present disclosure.
FIG. 3 is a diagram of a first membrane distillation device of a wastewater treatment system according to an exemplary embodiment of the present disclosure.
FIG. 4 is a diagram of a second membrane distillation device of a wastewater treatment system according to an exemplary embodiment of the present disclosure.

### [BEST MODE]

Hereinafter, various exemplary embodiments of the present disclosure will be described with reference to accompanying drawings. It should be understood that the present disclosure includes various modifications, equivalents, and/or alternatives, without being limited to a specific exemplary embodiment. With regard to the description of drawings, like reference numerals denote like components.

In this specification, the terms "have", "may have", "include", or "may include" represent the presence of the characteristic (for example, a numerical value, a function, an operation, or a component such as a part), but do not exclude the presence of additional characteristic.

In the specification, the terms "A or B", "at least one of A or/and B", or "at least one or more of A or/and B" may include all possible combinations of enumerated items. For example, the terms "A or B", "at least one of A and B", or "at least one of A or B" may refer to an example which includes (1) at least one A, (2) at least one B, or (3) all at least one A and at least one B.

The expression "configured to (or set to)" may be interchangeably used with "suitable for", "having the capacity to", "designed to", "adapted to", "made to", or "capable of" depending on the situation. The terms "configured to (or set)" may not necessarily mean only "specifically designed to".

The terms used in this specification are merely used to describe a specific embodiment, but do not intend to limit the scope of another embodiment. A singular form may include a plural form if there is no clearly opposite meaning in the context. Terms used herein including technical or scientific terms may have the same meaning as commonly understood by those skilled in the art. Among the terms used in this specification, terms defined in the general dictionary may be interpreted as having the same or similar meaning as the meaning in the context of the related art, but is not ideally or excessively interpreted to have formal meanings unless clearly defined in this specification. In some cases, even though the terms are defined in this specification, the terms are not interpreted to exclude the embodiments of the present specification.

Therefore, configurations of exemplary embodiments described in the present specification are only the most preferred embodiment of the present invention and do not represent all of the technical spirit of the present invention, and thus it is to be understood that various equivalents and modified examples, which may replace the configurations, are possible when filing the present application.

In the specification, unless explicitly described to the contrary, the word "comprise" and variations such as "comprises" or "comprising", will be understood to imply the inclusion of stated elements but not the exclusion of any other elements.

Objects, specific advantages, and novel features of the present disclosure explained in the present specification will be more apparent from the following detailed description and exemplary embodiments associated with the accompanying drawings. In the specification, it should note that in giving reference numerals to elements of each drawing, like reference numerals refer to like elements even though like elements are shown in different drawings. The terms such as "one surface", "the other surface", "first" or "second" may be used to distinguish one constituent element from the other constituent element, but the component is not limited by the above-described terms. Hereinafter, in the description of the present disclosure, detailed descriptions of related known technologies that may unnecessarily obscure the gist of the present disclosure will be omitted.

Hereinafter, an exemplary embodiment of the present disclosure will be described in detail with reference to accompanying drawings and the like reference numeral denotes the like component.

Hereinafter, a wastewater treatment system 1 according to the present disclosure will be described with reference to drawings.

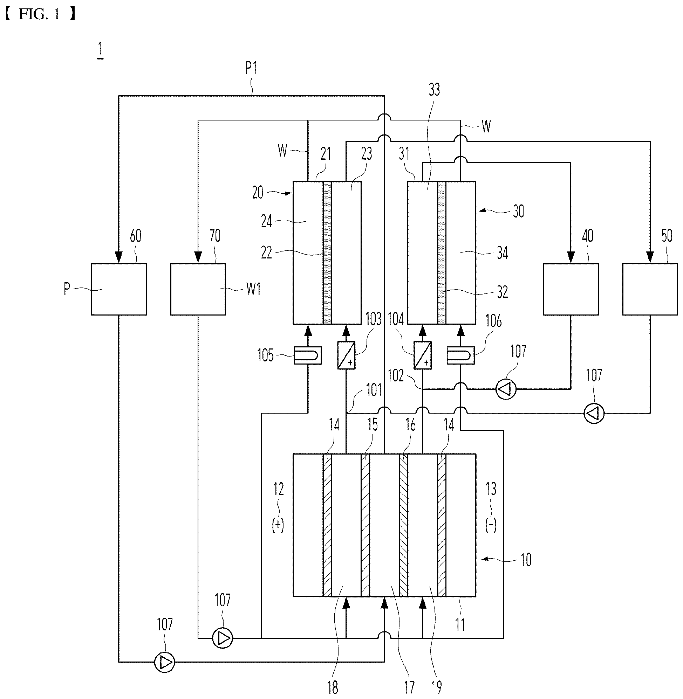

FIG. 1 is a diagram of a wastewater treatment system 1 according to an exemplary embodiment of the present disclosure.

A wastewater treatment system 1 according to an exemplary embodiment of the present disclosure is a wastewater treatment system 1 which treats a wastewater P including a sodium sulfate solution and includes an electrodialysis device 10 which separates the sodium sulfate solution of the wastewater P into a first solution C1 including sulfate ions, a second solution C2 including sodium ions, and a circulated wastewater P1 from which sodium sulfate is removed, a first membrane distillation device 20 which extracts a purified water W from the first solution C1 to concentrate the first solution C1, and a second membrane distillation device 30 which extracts a purified water W from the second solution C2 to concentrate the second solution C2.

The wastewater treatment system 1 according to the exemplary embodiment of the present disclosure specifically relates to a closed-circulating wastewater reuse and catalyst recovery system which treats and reuses wastewater generated during a depolymerization process of polyethylene terephthalate (PET). PET is a polymer material widely used to manufacture various products, such as fibers, bottles, and films, and sodium hydroxide (NaOH) and sulfate acid (H₂SO₄) are mainly used in the depolymerization process. The wastewater generated in this process includes various compounds, such as sodium sulfate (Na₂SO₄) and these compounds are harmful to the environment so that it is necessary to appropriately treat the compounds.

In the depolymerization process of PET, sodium hydroxide (NaOH) is used to hydrolyze ester bonds to produce ethylene glycol (EG) and terephthalic acid (TPA). In this process, sodium hydroxide is converted to sodium terephthalate (Na₂TP), and then sulfate acid (H₂SO₄) is added to recover terephthalic acid and form sodium sulfate (Na₂SO₄). The wastewater contains a high concentration of salt, such as sodium sulfate, and needs to be purified and concentrated before being released into the environment.

As illustrated in FIG. 1, the wastewater treatment system 1 according to the exemplary embodiment of the present disclosure includes an electrodialysis device 110, a first membrane distillation device 20, and a second membrane distillation device 30.

The wastewater treatment system 1 according to the exemplary embodiment of the present disclosure is to treat a wastewater P including a sodium sulfate solution and the wastewater P first enters the electrodialysis device 10 for treatment. The electrodialysis device 10 separates the wastewater P including the sodium sulfate solution into a first solution C1 including sulfate ions, a second solution C2 including sodium ions, and a circulated wastewater P1 from which the sodium sulfate is removed.

The first membrane distillation device 20 is a device which concentrates the first solution C1 by heating the first solution C1 and extracting purified water as water vapor.

The second membrane distillation device 30 is a device which concentrates the second solution C2 by heating the second solution C2 and extracting purified water as water vapor.

The wastewater treatment system 1 according to the exemplary embodiment of the present disclosure includes a wastewater tank 60 in which the wastewater P is stored and the circulated wastewater P1 may enter the wastewater tank 60.

In the wastewater treatment system 1 according to the exemplary embodiment of the present disclosure, the wastewater tank 60 is a tank in which the wastewater P is stored. The wastewater P stored in the wastewater tank 60 enters the electrodialysis device 10. At this time, the circulated wastewater P1 from which the sodium sulfate is removed in the electrodialysis device 10 enters the wastewater tank 60 again. Accordingly, the sodium sulfate which is not completely removed from the circulated wastewater P1 enters the electrodialysis device 10 again to allow the closed circulation of the wastewater to maximize the efficiency of the system 1.

The wastewater treatment system 1 according to the exemplary embodiment of the present disclosure may include a cooling water tank 70 in which purified waters W extracted from the first membrane distillation device 20 and the second membrane distillation device 30 are joined and cooled to be formed as a cooling water W1.

The cooling water tank 70 is formed to circulate the cooling water W1 in the system 1. In the cooling water tank 70, purified waters W extracted from the first membrane distillation device 20 and the second membrane distillation device 30 are joined. In the cooling water tank 70, the purified waters W are collected to be stored as a cooling water W1.

In the wastewater treatment system 1 according to an exemplary embodiment of the present disclosure, the first membrane distillation device 20 includes a first membrane distillation tank 21 and a first hydrophobic dialysis membrane 22 which divides the first membrane distillation tank 21 into two spaces, a first solution concentrating space 23 into which the first solution C1 enters and a first cooling space 24 into which the cooling water W1 enters and allows a distilled water extracted from the first solution C1 to pass therethrough in the form of waste vapor. The second membrane distillation device 30 includes a second membrane distillation tank 31 and a second hydrophobic dialysis membrane 32 which divides the second membrane distillation tank 31 into two spaces, a second solution concentrating space 33 into which the second solution C2 enters and a second cooling space 34 into which the cooling water W1 enters and allows a distilled water extracted from the second solution C2 to pass therethrough in the form of water vapor.

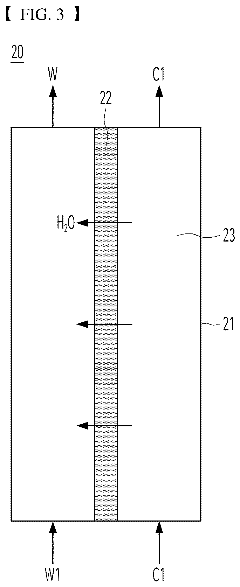

Referring to FIG. 3, the first membrane distillation device 20 is illustrated. The first membrane distillation device 20 may include the first membrane distillation tank 21, the first hydrophobic dialysis membrane 22, the first solution concentrating space 23, and the first cooling space 24.

The first membrane distillation tank 21 configures a frame of the first membrane distillation device 20.

The first hydrophobic dialysis membrane 22 divides an internal space of the first membrane distillation tank 21 into two spaces, the first solution concentrating space 23 and the first cooling space 24. The first solution C1 enters the first solution concentrating space 23 and is supplied in a heated state to smoothly generate water vapor. The water vapor generated from the first solution C1 moves to the first cooling space 24 through the first hydrophobic dialysis membrane 22. The first cooling space 24 helps the cooled cooling water W1 to enter therein to concentrate the water vapor to be converted into purified water W.

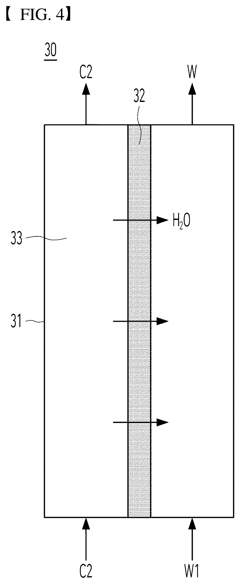

Referring to FIG. 4, the second membrane distillation device 30 is illustrated. The second membrane distillation device 30 may include the second membrane distillation tank 31, the second hydrophobic dialysis membrane 32, the second solution concentrating space 33, and the second cooling space 34.

The second membrane distillation tank 31 configures a frame of the second membrane distillation device 30.

The second hydrophobic dialysis membrane 32 divides an internal space of the second membrane distillation tank 31 into two spaces, the second solution concentrating space 33 and the second cooling space 34. The second solution C2 enters the second solution concentrating space 33 and is supplied in a heated state to smoothly generate water vapor. The water vapor generated from the second solution C2 moves to the second cooling space 34 through the second hydrophobic dialysis membrane 32. The second cooling space 34 helps the cooled cooling water W1 to enter therein to concentrate the water vapor to be converted into purified water W.

The wastewater treatment system 1 according to the exemplary embodiment of the present disclosure includes a first solution concentrating tank 40 into which the first solution C1 extracted from the first solution concentrating space 23 enters and a second solution concentrating tank 50 into which the second solution C2 extracted from the second solution concentrating space 33 enters. The first solution C1 from the first solution concentrating tank 40 enters the first solution concentrating space 23 again to be concentrated and the second solution C2 from the second solution concentrating tank 50 enters the second solution concentrating space 33 again to be concentrated.

Referring to FIG. 1, it may be seen that the first solution C1 concentrated in the first membrane distillation device 20 is circulated to be continuously concentrated. To this end, the first solution concentrating tank 40 in which the first solution C1 extracted from the first solution concentrating space 23 is collected is formed. The first solution concentrating tank 40 is further embedded with a first solution concentration measurement sensor which measures a concentration of the first solution C1. Accordingly, if the first solution C1 is formed with a predetermined concentration or higher in the first solution concentrating tank 40, a controller of the system 1 may drain the first solution C1 to the outside. If a concentration of the first solution C1 of the first solution concentrating tank 40 is formed to be a target concentration or lower, the first solution C1 enters the first solution concentrating space 23 again to sustain continuous and cyclical concentrating activity.

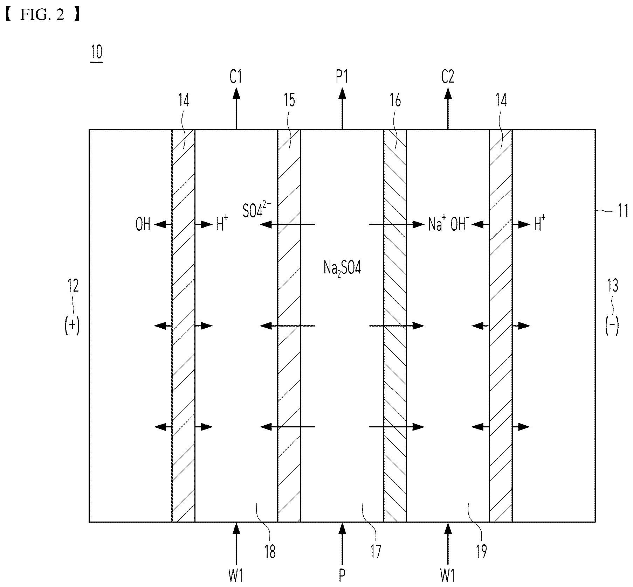

Referring to FIG. 2, it may be seen that the second solution C2 concentrated in the second membrane distillation device 30 is circulated to be continuously concentrated. To this end, the second solution concentrating tank 50 in which the second solution C2 extracted from the second solution concentrating space 33 is collected is formed. The second solution concentrating tank 50 may be further embedded with a second solution concentration measurement sensor which measures the concentration of the second solution C2. Accordingly, if the second solution C2 is formed with a predetermined concentration or higher in the second solution concentrating tank 50, a controller of the system 2 may drain the second solution C2 to the outside. If a concentration of the second solution C2 of the second solution concentrating tank 50 is formed to be a target concentration or lower, the second solution C2 enters the second solution concentrating space 33 again to sustain continuous and cyclical concentrating activity.

In the wastewater treatment system 1 according to the exemplary embodiment of the present disclosure, the electrodialysis device 10 includes an electrodialysis tank 11, an anode 12 formed on one side of the electrodialysis tank 11, a cathode 13 formed on the other side of the electrodialysis tank 11, two bipolar membranes 14 formed adjacent to the anode 12 and the cathode 13, an anion dialysis membrane 15 which is formed to be opposite to the bipolar membranes 14 and closer to the anode, a cation dialysis membrane 16 which is formed to be opposite to the bipolar membranes 14 and closer to the cathode, a central space 17 which is separated by the cation dialysis membrane 16 and the anion dialysis membrane 15 and allows the wastewater P to enter therein, a first solution forming space 18 which is separated by the bipolar membranes 14 and the anion dialysis membrane 15, and a second solution forming space 19 which is separated by the bipolar membranes 14 and the cation dialysis membrane 16. In the first solution forming space 18, sulfate ions obtained by electrolyzing a sodium sulfate solution in the central space 17 pass through the anion dialysis membrane 15 to form the first solution C1. Further, in the second solution forming space 19, sodium ions obtained by electrolyzing a sodium sulfate solution in the central space 17 pass through the cation dialysis membrane 16 to form the second solution C2.

The wastewater treatment system 1 according to the exemplary embodiment of the present disclosure forms the first solution C1 as acidic aqueous solution including sulfate acid ions in the first solution forming space 18 and forms the second solution C2 as aqueous hydroxide solution including sodium ions in the second solution forming space 19.

The electrodialysis device 10 of the wastewater treatment system 1 according to the exemplary embodiment of the present disclosure forms an electric field between the anode 12 and the cathode 13 to accelerate the movement of ions. The electrodialysis tank 11 forms a frame of the electrodialysis device 10. At this time, the anode 12 and the cathode 13 are formed on one side and the other side of the electrodialysis tank 11. Two bipolar membranes 14 are formed to be adjacent to the anode 12 and the cathode 13 and serve to generate hydrogen ions (H⁺) and hydroxide ions (OH⁻). The anion dialysis membrane 15 moves sulfate ions (SO₄²⁻) which are anions and the cation dialysis membrane 16 moves sodium ions (Na⁺) which are cations.

In the electrodialysis device 10, an electric field is formed between the anode 12 and the cathode 13 to accelerate the movement of the ions. Due to the influence of the electric field, the hydrogen ions move toward the cathode 13 and the hydroxide ions move toward the anode 12. Sulfate ions move to the first solution forming space 18 in which the first solution C1 is formed through the anion dialysis membrane 15 so that the ion exchange occurs. Sodium ions move to the second solution forming space 19 in which the second solution C2 is formed through the cation dialysis membrane 16 so that the ion exchange occurs.

During this process, the bipolar membrane 14 electrolyzes water to produce hydrogen ions and hydroxide ions, and the anion dialysis membrane 15 and the cation dialysis membrane 16 serve to move anions and cations, respectively, to help separate the electrolyte.

The central space 17 is a space in which sodium sulfate is removed from the wastewater P and circulated wastewater P1 from the central space 17 returns to the wastewater tank 60 with a predetermined amount of sodium sulfate removed to be circulated in the system 1.

In the wastewater treatment system 1 according to the exemplary embodiment of the present disclosure, the cooling water W1 may be supplied to the first solution forming space 18 and the second solution forming space 19.

Referring to FIG. 1, it may be seen that the cooling water W1 stored in the cooling water tank 70 also enters the first solution forming space 18 and the second solution forming space 19. Accordingly, water is consistently supplied from the cooling water tank 70 so that the first solution C1 and the second solution C2 may be extracted from the electrodialysis device 10 without additionally supplying water to the system 1.

The wastewater treatment system 1 according to the exemplary embodiment of the present disclosure may include a first solution joining point 101 in which the first solution C1 from the first solution concentrating tank 40 and the first solution C1 from the first solution forming space 18 are joined, a first heater 103 formed between the first solution joining point 101 and the first solution concentrating space 23, a second solution joining point 102 in which the second solution C2 from the second solution concentrating tank 50 and the second solution C2 from the second solution forming space 19 are joined, and a second heater 104 formed between the second solution joining point 102 and the second solution concentrating space 33.

Referring to FIG. 1, the wastewater treatment system 1 according to the exemplary embodiment of the present disclosure may further include the first solution joining point 101, the second solution joining point 102, the first heater 103, and the second heater 104.

At the first solution joining point 101, the first solution C1 which is newly produced in the first solution forming space 18 and the first solution C1 in the first solution concentrating tank 40 which has been already circulated are joined. As the first heater 103 is formed between the first solution joining point 101 and the first solution concentrating space 23 so that the first solution C1 is heated at one time, which accelerates the distillation activity in the first membrane distillation device 20.

At the second solution joining point 102, the second solution C2 which is newly produced in the second solution forming space 19 and the second solution C2 in the second solution concentrating tank 50 which has been already circulated are joined. As the second heater 104 is formed between the second solution joining point 102 and the second solution concentrating space 33 so that the second solution C2 is heated at one time, which accelerates the distillation activity in the second membrane distillation device 30.

The wastewater treatment system 1 according to the exemplary embodiment of the present disclosure may include a first cooler 105 which cools the cooling water W1 which enters the first cooling space 24 and a second cooler 106 which cools the cooling water W1 which enters the second cooling space 34.

Referring to FIG. 1, the first cooler 105 cools the cooling water W1 which enters the first cooling space 24 to cool distilled water vapor in the first cooling space.

Similarly, the second cooler 106 cools the cooling water W1 which enters the second cooling space 34 to cool distilled water vapor in the second cooling space.

The wastewater treatment system 1 according to the exemplary embodiment of the present disclosure reuses the sodium hydroxide and sulfate acid which are subject to wastewater treatment and then recovered as a catalyst. The recovered sodium hydroxide is used for the PET depolymerization process and sulfate acid is recycled to convert sodium terephthalate into terephthalic acid.

Hereinabove, although the present disclosure has been described in detail through specific examples, this is intended to specifically explain the present disclosure and the present disclosure is not limited thereto, and it will be apparent that modifications or improvements may be made by those skilled in the art within the technical spirit of the present disclosure.

All simple modifications or changes of the present disclosure fall within the scope of the present disclosure and the specific protection scope of the present disclosure will be made clear by the appended claims.

### [Explanation of Reference Numerals and Symbols]

P: Wastewater
P1: Circulated Wastewater
C1: First Solution
C2: Second Solution
W: Purified Water
W1: Cooling Water
1: Wastewater Treatment System
10: Electrodialysis Device
11: Electrodialysis Tank
12: Anode
13: Cathode
14: Bipolar Membrane
15: Anion Dialysis Membrane
16: Cation Dialysis Membrane
17: Central Space
18: First Solution Forming Space
19: Second Solution Forming Space
20: First Membrane Distillation Device
21: First Membrane Distillation Tank
22: First Hydrophobic Dialysis Membrane
23: First Solution Concentrating Space
24: First Cooling Space
30: Second Membrane Distillation Device
31: Second Membrane Distillation Tank
33: Second Solution Concentrating Space
34: Second Cooling Space
40: First Solution Concentrating Tank
50: Second Solution Concentrating Tank
60: Wastewater Tank
70: Cooling Water Tank
101: First Solution Joining Point
102: Second Solution Joining Point
103: First Heater
104: Second Heater
105: First Cooler
106: Second Cooler
107: Pump

## Claims

1. A wastewater treatment system which treats a wastewater including a sodium sulfate solution, comprising:
an electrodialysis device which separates the wastewater into a first solution including sulfate ions, a second solution including sodium ions, and a circulated wastewater from which sodium sulfate is removed;
a first membrane distillation device which extracts a purified water from the first solution to concentrate the first solution; and
a second membrane distillation device which extracts a purified water from the second solution to concentrate the second solution.

2. The wastewater treatment system according to claim 1, further comprising:
a wastewater tank in which the wastewater is stored,
wherein the circulated wastewater enters the wastewater tank.

3. The wastewater treatment system according to claim 1, further comprising:
a cooling water tank in which purified waters extracted from the first membrane distillation device and the second membrane distillation device are joined and cooled to be formed as a cooling water.

4. The wastewater treatment system according to claim 3, wherein the first membrane distillation device includes:
a first membrane distillation tank; and
a first hydrophobic dialysis membrane which divides the first membrane distillation tank into two spaces, a first solution concentrating space into which the first solution enters and a first cooling space into which the cooling water enters and allows a distilled water extracted from the first solution to pass therethrough in the form of water vapor, and
the second membrane distillation device includes:
a second membrane distillation tank; and
a second hydrophobic dialysis membrane which divides the second membrane distillation tank into two spaces, a second solution concentrating space into which the second solution enters and a second cooling space into which the cooling water enters and allows a distilled water extracted from the second solution to pass therethrough in the form of water vapor.

5. The wastewater treatment system according to claim 4, further comprising:
a first solution concentrating tank into which the first solution extracted from the first solution concentrating space enters; and
a second solution concentrating tank into which the second solution extracted from the second solution concentrating space enters,
wherein the first solution from the first solution concentrating tank enters the first solution concentrating space to be concentrated, and the second solution from the second solution concentrating tank enters the second solution concentrating space to be concentrated.

6. The wastewater treatment system according to claim 5, wherein the electrodialysis device includes:
an electrodialysis tank:
an anode which is formed on one side of the electrodialysis tank;
a cathode which is formed on the other side of the electrodialysis tank;
two bipolar membranes which are formed to be adjacent to the anode and the cathode;
an anion dialysis membrane which is formed to be opposite to the bipolar membranes to be closer to the anode;
a cation dialysis membrane which is formed to be opposite to the bipolar membranes to be closer to the cathode;
a central space which is separated by the cation dialysis membrane and the anion dialysis membrane and allows the wastewater to enter therein;
a first solution forming space which is separated by the bipolar membranes and the anion dialysis membrane and electrolyzes the sodium sulfate solution in the central space so that sulfate ions pass through the anion dialysis membrane to form a first solution; and
a second solution forming space which is separated by the bipolar membranes and the cation dialysis membrane and electrolyzes the sodium sulfate solution in the central space so that sodium ions pass through the cation dialysis membrane to form a second solution.

7. The wastewater treatment system according to claim 6, wherein the cooling water is supplied to the first solution forming space and the second solution forming space.

8. The wastewater treatment system according to claim 7, further comprising:
a first solution joining point in which a first solution from the first solution concentrating tank and a first solution from the first solution forming space are joined;
a first heater formed between the first solution joining point and the first solution concentrating space;
a second solution joining point in which a second solution from the second solution concentrating tank and a second solution from the second solution forming space are joined; and
a second heater formed between the second solution joining point and the second solution concentrating space.

9. The wastewater treatment system according to claim 8, further comprising:
a first cooler which cools a cooling water entering the first cooling space; and
a second cooler which cools a cooling water entering the second cooling space.

10. The wastewater treatment system according to claim 9, wherein in the first solution forming space, the first solution is formed as an acidic aqueous solution including sulfate ions and in the second solution forming space, the second solution is formed as an aqueous hydroxide solution including sodium ions.
